**Europäisches Patentamt**

**European Patent Office**

**Office européen des brevets**

(19)

(11) Veröffentlichungsnummer: **0 348 740 B1**

(12) # EUROPÄISCHE PATENTSCHRIFT

(45) Veröffentlichungstag der Patentschrift:
09.10.91 Patentblatt 91/41

(51) Int. Cl.⁵: **F16L 23/02, F16L 27/12**

(21) Anmeldenummer: **89110812.8**

(22) Anmeldetag: **14.06.89**

(54) Fernbedienbare Schraubverbindung.

(30) Priorität: **27.06.88 DE 3821641**

(43) Veröffentlichungstag der Anmeldung:
**03.01.90 Patentblatt 90/01**

(45) Bekanntmachung des Hinweises auf die
Patenterteilung:
**09.10.91 Patentblatt 91/41**

(84) Benannte Vertragsstaaten:
**BE DE FR GB**

(56) Entgegenhaltungen:
**EP-A- 0 194 907**
**EP-A- 0 254 630**
**DD-A- 2 008 163**
**DE-A- 1 775 861**
**US-A- 3 053 553**
**US-A- 4 198 076**
**US-A- 4 426 063**

(73) Patentinhaber : **SIEMENS
AKTIENGESELLSCHAFT
Wittelsbacherplatz 2
W-8000 München 2 (DE)**
Patentinhaber : **Deutsche Gesellschaft für
Wiederaufarbeitung von Kernbrennstoffen
mbH
Hamburger Allee 4 Postfach 1407
W-3000 Hannover 1 (DE)**

(72) Erfinder : **Schabert, Hans-Peter, Dipl.-Ing.
Friedrich-Bauer-Strasse 28
W-8520 Erlangen (DE)**
Erfinder : **Laurer, Erwin, Dipl.-Ing.
Frankenstrasse 5
W-8521 Möhrendorf (DE)**
Erfinder : **Strickroth, Erich
Zeidelweide 8 B
W-8520 Erlangen (DE)**

(74) Vertreter : **Fuchs, Franz-Josef, Dr.-Ing. et al
Postfach 22 13 17
W-8000 München 22 (DE)**

## Beschreibung

Die Erfindung betrifft eine fernbedienbare Schraubverbindung mit zwei Flanschen, die durch mindestens einen Schraubenbolzen mit einer Mutter verbunden sind, wobei zwischen der Mutter und dem dieser zugekehrten Flansch ein den Schraubenbolzen umgebender Ring angeordnet ist, der entlang dem Schraubbolzen in axialer Richtung verschiebbar ist.

Derartige Ringe haben insbesondere die Aufgabe, zu verhindern, daß beim Verdrehen der Mutter relativ zum Losflansch an diesem durch die hohe örtliche Pressung Beschädigungen durch Fressen der werkstoffe verursacht werden.

Bei den aus der europäischen Patentanmeldung 0208969 bekannten Rohrverbindungen dienen zwei Ringe, die den Schraubenbolzen umgeben, mit Hilfe von schrägen Gleitflächen als Spannmittel, die eine seitliche Bewegung ausführen. Mit der seitlichen Bewegung wird ein in einem Festflansch sitzender lose Flansch überdeckt und gehalten.

Bei einer anderen Rohrverbindung nach der deutschen Patentschrift 1252483 ist der Ring mit einer der Mutter zugekehrten balligen Fläche versehen, um eine Einstellmöglichkeit der Mutter auf den Flansch zu erreichen.

Nun reichen die bekannten Ringe unter extremen Verhältnissen, etwa bei hoher Last, korrosiver Atmosphäre und nach langen Stillstandszeiten, nicht immer aus, Schäden auszuschließen, vor allem, wenn die Wirksamkeit eines Schmiermittels zerstört sein sollte. Die in einem solchen Fall sehr stark erhöhte Reibung verhindert, daß beim Spannen oder Nachspannen des Spannelements trotz Anwendung eines hohen Drehmoments die Spannkraft erreicht wird, die zur Befestigung der Flanschverbindung, z.B. zur sicheren Dichtung einer Rohrverbindung, erforderlich ist. Es ist insbesondere wichtig, Schäden an dem Losflansch auszuschließen, wenn dieser in eine Rohrleitung eingeschweißt ist und nur schwer ausgetauscht werden kann.

Die Erfindung geht daher von der Aufgabe aus, die Schraubverbindung der oben genannten Art so auszubilden, daß die vorgenannten Probleme sicher beherrscht werden.

Erfindungsgemäß ist vorgesehen, daß der Ring eine mit dem Schraubenbolzen unverdrehbar verbundene Hülse ist.

Mit der Hülse wird erreicht, daß sich die Mutter beim Anziehen, das zum Verspannen der Rohrverbindung vorgenommen wird, nur gegenüber der stillstehenden Schraube, nicht aber gegenüber dem Flansch verdreht. Damit entfallen auf den Flansch wirkende Reibungskräfte. Zugleich ist dort ein Fressen ausgeschlossen. Die Anzugskraft für die Schraubverbindung wird vergleichmäßigt. Die Hülse überträgt dabeinur noch eine reine Längskraft von z.B. 160 kN auf den Flansch, wenn das Drehmoment von z.B. 1500 Nm zum Anziehen der Mutter als Differenzdrehmoment zwischen der Mutter und der Schraube aufgebracht wird. Ein weiterer Vorteil der drehfixierten Hülse ist es, daß das in die Mutter eingeleitete Drehmoment vollständig und direkt über die Schraube zurückgeführt wird, wenn das aus Mutter und Schraube bestehende Spannelement zwei Flachkante aufweist, die mit einem Differenz-Drehschrauber gegeneinander verdreht werden können. Hier kann sich an beiden ein Schraubwerkzeug abstützen, ohne daß ein Teil des Drehmomentes über das Flanschpaar übertragen werden muß.

Als Verbindung zwischen Schraubenbolzen und Hülse ist insbesondere ein Zahnwellenprofil günstig. Das Zahnwellenprofil kann vorteilhaft ein gegenüber genormten Abmessungen, z.B. nach DIN 5480 vergrößertes Spiel, insbesondere in radialer Richtung, aufweisen. Die Spielvergrößerung kann z.B. 0,5 mm betragen.

Die Hülse kann an ihrem dem Flansch zugekehrten Ende mit kreisförmigen Keilrillen versehen werden. Vorteilhafterweise wirken die Keilrillen mit vorgeformten Keilrillen des Flansches zusammen. Mit dieser Ausbildung kann die Selbsthemmung des in den Festflansch eingedrehten Schraubenbolzens erwünschterweise vergrößert werden. Man kann somit an dieser Stelle ein leichtgängiges Grobgewinde einsetzen, das wenig korrosionsempfindlich ist und auch ohne Schmierung kaum zum Fressen oder einer Verkrustung neigt.

An dem der Hülse abgekehrten Ende der Mutter können Markierungen an dem Schraubenbolzen vorgesehen sein. Sie ergeben Sichtmarken, mit denen kontrolliert werden kann, ob nach dem Spannen der Schraubverbindung tatsächlich die Axialkraft der Mutter durch die Flanschverbindung und eine gegebenenfalls zwischenden Flanschen liegende Dichtung läuft.

Als weitere Ausbildung der Erfindung kann an dem der Hülse abgekehrten Ende des Schraubenbolzens ein rotationssymmetrischer Greifknopf angeordnet sein. An diesen Knopf kann ein in einem Schraubwerkzeug installierter Greifer die Schraubeneinheit (Schraube, Hülse, Mutter) festhalten, während das Grobgewinde des Schraubenbolzens aus dem Festflansch und gegebenenfalls auch aus dem Loseflansch herausgedreht wird. Man kann so auch schwergängige Schrauben leicht wegschaffen und fernbedient durch eine neue Schraubeneinheit ersetzen.

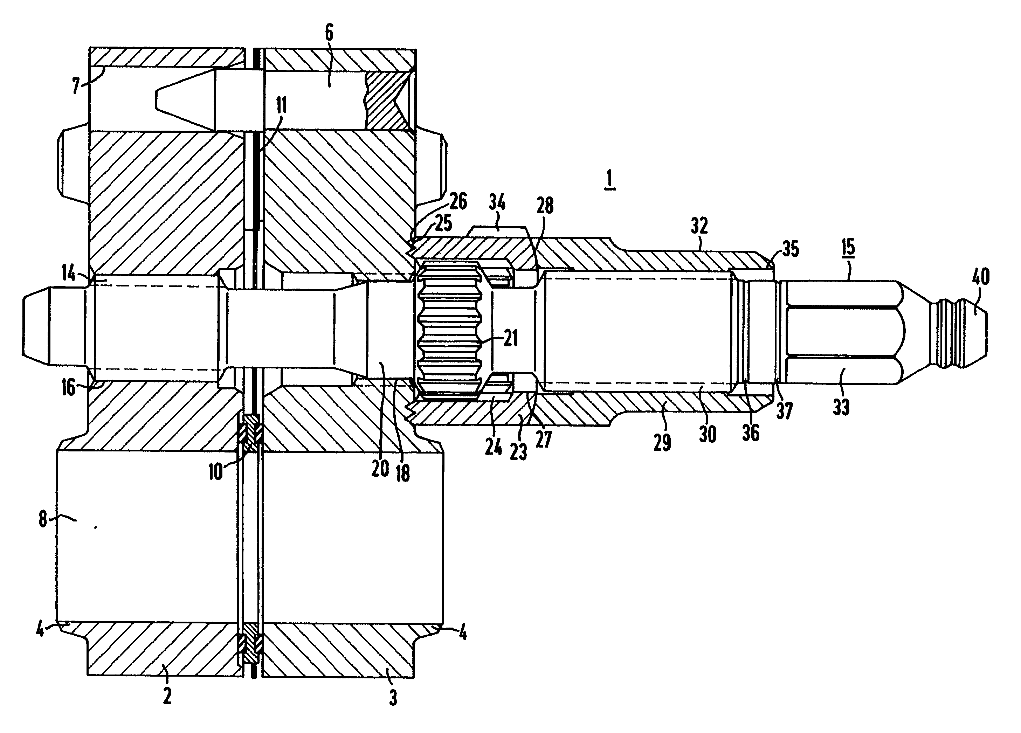

Zur näheren Erläuterung der Erfindung wird anhand der Zeichnung ein Ausführungsbeispiel beschrieben. Dabei zeigt die einzige Figur in einem Schnitt eine Schraubverbindung nach der Erfindung in Form einer Rohrverbindung.

Die Rohrverbindung 1 ist für unzugängliche Anlagen vorgesehen, wie sie z.B. in kerntechnischen Betrieben, insbesondere in einer Wiederaufarbeitungsanlage, vorkommen können. Dort sind durch Fernbedienung die beiden Flansche 2 und 3 miteinander dicht zu verbinden, an deren Rohrstutzen 4 nicht weiter dargestellte Rohrleitungen angeschweißt sind. Der Flansch 2 ist dabei der sogenannte Festflansch, da er in der Anlage fest montiert ist. Der Flansch 3 ist der sogenannte Loseflansch. An ihm sind lösbare Verbindungsleitungen angebracht.

Der Flansch 3 greift mit einem Zentrierbolzen 6 in eine Zentrierbohrung 7 des Festflansches 2. Damit wird die richtige Lage der Flansche 2 und 3 zueinander auch im Bereich der Durchgangsbohrung 8 sichergestellt, die mit einer Dichtung 10 abgedichtet werden soll. Die Dichtung 10 hängt mit einem Haltestreifen 11 ebenfalls an den Zentrierzapfen 6.

Zum Schließen der Rohrverbindung 1 wird das Gewinde 14 eines Schraubenbolzens 15 in eine Gewindebohrung 16 des Festflansches 2 eingeschraubt. Das Gewinde 14 und die Gewindebohrung 16 ist ein Grobgewinde M 36 × 8. Es hat zum leichteren Einschrauben und wegen der Gängigkeit ein großes Spiel, nämlich zwei Millimeter axial und diametral. Ein gleiches Grobgewinde ist auch in dem dem Flansch 2 abgekehrten Bereich 18 im Flansch 3 vorgesehen, so daß ein Abfallen des Loseflansches 3 von dem Schraubenbolzen 15 verhindert ist.

Im Anschluß an eine zentrierende Verdickung 20 des Schraubenbolzens 15, mit der dieser in dem Gewindebereich 18 eingreifen kann, ist der Schraubenbolzen 15 mit einem Zahnwellenprofil 21 versehen, das nach DIN 5480, jedoch mit einem um 0,5 mm radial vergrößerten Spiel, nämlich mit einem Außendurchmesser von 44 mm ausgeführt ist. Mit diesem z.B. 20 mm langen Zahnwellenprofil greift der Schraubenbolzen 15 in das Gegenprofil einer Hülse 23, die den Schraubenbolzen umgibt. Der Zahnprofilbereich 24 der Hülse 23 ist jedoch deutlich länger als der Zahnwellenbereich der Schraube, z.B. doppelt so lang, so daß eine Schiebebewegung der Hülse 23 in axialer Richtung möglich ist. In Umfangsrichtung sind Schraubenbolzen 15 und Hülse 23 dagegen unverdrehbar verbunden.

Die Hülse 23 besitzt an ihrer dem Flansch 3 zugekehrten Stirnseite Keilrillen 25, die in entsprechend vorgeformte Keilrillen 26 des Flansches 3 eingreifen. Mit diesen Keilrillen ergibt sich eine Vergrößerung der Reibung, die die Selbsthemmung der Schraube 15 in der Rohrverbindung 1 vergrößert. Am anderen Ende hat die Hülse eine Innenschulter 27 mit einem kleineren Innendurchmesser als der Außendurchmesser des Zahnwellenprofils 21, so daß ein Abrutschen über das freie Ende des Schraubenbolzens 15 verhindert ist.

An dem dem Flansch 3 abgekehrten Ende ist die Hülse 23 mit einer ballig gerundeten Oberfläche 28 versehen. Diese Fläche wirkt mit einer entsprechend balligen Oberfläche einer Mutter 29 zusammen, die auf einem Gewinde 30 des Schraubenbolzens 15 sitzt. Das Gewinde 30 ist ein Feingewinde M 39 × 4. Es dient zum Spannen der Rohrverbindung 1, nachdem das Grobgewinde 14, 16 geschlossen ist, so daß ein Widerlager für die Spannkraft geschaffen wurde.

Zum Spannen wird die Mutter 29 mit einer Abflachung 32, insbesondere einem Sechskant, mit Hilfe eines Differenz-Drehschraubers gegenüber dem Schraubenbolzen 15 verdreht, der seinerseits eine Abflachung in Form eines Sechskants 33 aufweist. Bei dieser Verdrehung der Mutter 29 wird die Verbindung gegenüber dem Flansch 3 nicht beansprucht, weil die Hülse 23 mit dem Schraubenbolzen 15 unverdrehbar verbunden ist. Alternativ könnte der Schraubenbolzen 15 auch über die Hülse 23 gehalten werden, die dann mit Zähnen 34 oder einem Flachkant versehen ist.

Die Mutter 29 wird solange angezogen, bis ein für die Vorspannung der Rohrverbindung 1 gewünschtes Drehmoment erreicht ist. Dabei kann durch die Lage des Randes 35 der Mutter 29 gegenüber den Kerben 36 und 37 an den Schraubenbolzen 15 erkannt werden, daß die Verspannung von dem Schraubenbolzen 15 über das Gewinde 16 auf den Flansch 2 und von diesen über die Dichtung 10 auf den Flansch 3 abgetragen wird, der seinerseits über die Hülse 23 gegen die Mutter 29 abgestützt ist. Eine Fehlstellung der Mutter 23, bei der diese etwa auf den Zähnen der Zahnwelle 21 aufsitzen würde, würde zu einer anderen Stellung gegenüber den Markierungen 36, 37 führen.

Die Figur zeigt noch, daß der Schraubenbolzen 15 an seinem den Flanschen 2, 3 abgekehrten Ende einen rotationssymmetrischen Greifknopf 40 aufweist. Mit diesem kann der Schraubenbolzen 15, die Hülse 23 und die Mutter 29 gehalten werden, wenn der Schraubenbolzen 15 aus dem Grobgewinde 16 des Festflansches 2 und gegebenenfalls aus dem Loseflansch 3 herausgedreht wird.

## Patentansprüche

1. Fernbedienbare Schraubverbindung mit zwei Flanschen (2, 3), die durch mindestens einen Schraubenbolzen (15) mit einer Mutter (29) verbunden sind, wobei zwischen der Mutter (29) und dem dieser zugekehrten Flansch (3) ein den Schraubenbolzen (15) umgebender Ring angeordnet ist, der entlang dem Schraubenbolzen (15) in axialer Richtung verschiebbar ist, **dadurch gekennzeichnet**, daß der Ring eine mit dem Schraubenbolzen (15) unverdrehbar verbundene Hülse (23) ist.

2. Schraubverbindung nach Anspruch 1, **dadurch gekennzeichnet**, daß als Verbindung ein Zahnwellenprofil (21, 24) vorgesehen ist.

3. Schraubverbindung nach Anspruch 2, **dadurch gekennzeichnet**, daß das Zahnwellenprofil (21, 24) ein gegenüber genormten Abmessungen vergrößertes Spiel, insbesondere in radialer Richtung, aufweist.

4. Schraubverbindung nach Anspruch 1, 2 oder 3, **dadurch gekennzeichnet**, daß die Hülse (23) und Mutter (29) mit balligen Oberflächen (28) zusammenwirken.

5. Schraubverbindung nach Anspruch 2, 3 oder 4, **dadurch gekennzeichnet**, daß die Hülse (23) mit einer der Mutter (28) zugekehrten Innenschulter (27) versehen ist, deren Innendurchmesser größer als das Muttergewinde (30), aber kleiner als der Außendurchmesser des Zahnwellenprofils (21) ist.

6. Schraubverbindung nach einem der Ansprüche 1 bis 5, **dadurch gekennzeichnet**, daß der Schraubenbolzen (15) am Ende des Muttergewindes (30) einen Flachkant (33) zum Ansetzen eines Werkzeuges aufweist.

7. Schraubverbindung nach einem der Ansprüche 1 bis 5, **dadurch gekennzeichnet**, daß die Hülse (23) an ihrer Außenseite einen Flachkant oder Zähne (34) zum Ansetzen eines Werkzeugs aufweist.

8. Schraubverbindung nach einem der Ansprüche 1 bis 7, **dadurch gekennzeichnet**, daß die Hülse (23) an ihrem dem Flansch (3) zugekehrten Ende mit kreisförmigen Keilrillen (25) versehen ist.

9. Schraubverbindung nach Anspruch 8, **dadurch gekennzeichnet**, daß die Keilrillen (25) mit vorgeformten Keilrillen (26) des Flansches (3) zusammen wirken.

10. Schraubverbindung nach einem der Ansprüche 1 bis 9, **dadurch gekennzeichnet**, daß an dem der Hülse (23) abgekehrten Ende der Mutter (29) Markierungen (36, 37) an dem Schraubenbolzen (15) vorgesehen sind.

11. Schraubverbindung nach einem der Ansprüche 1 bis 10, **dadurch gekennzeichnet**, daß an dem der Hülse (23) abgekehrten Ende des Schraubenbolzens (15) ein rotationssymmetrischer Greifknopf (40) angeordnet ist.

12. Schraubverbindung nach einem der Ansprüche 1 bis 11, **dadurch gekennzeichnet**, daß der Schraubenbolzen (15) aus Vergütungsstahl hergestellt und das Gewinde (14, 30) gerollt ist.

13. Schraubverbindung nach einem der Ansprüche 1 bis 12, **dadurch gekennzeichnet**, daß die Flanschen (2, 3) Teil einer fernbedienbaren Rohrverbindung (1) mit einer den Schraubenbolzen (15) umfassenden Dichtung (10) sind.

## Claims

1. A remotely-controllable screw connection with two flanges (2, 3), which are connected by means of at least one screw bolt (15) to a nut (29), wherein, between the nut (29) and the flange (3) facing it, there is arranged a ring surrounding the screw bolt (15), which is able to be displaced along the screw bolt (15) in the axial direction, characterised in that the ring is a sleeve (23) connected to the screw bolt (15) in an non-rotatable manner.

2. A screw connection according to claim 1, characterised in that as a connection there is provided a serrated shaft profile (21, 24).

3. A screw connection according to claim 2, characterised in that the serrated shaft profile (21, 24) has play, which is increased relative to standard dimensions, in particular in the radial direction.

4. A screw connection according to claim 1, 2 or 3, characterised in that the sleeve (23) and nut (29) have mutually cooperating spherical surfaces (28).

5. A screw connection according to claim 2, 3, or 4, characterised in that the sleeve (23) is provided with an inner shoulder (27) facing the nut (28), the inner diameter of which is greater than the nut thread (30), but smaller than the outer diameter of the serrated shaft profile (21).

6. A screw connection according to one of claims 1 to 5, characterised in that the screw bolt (15) has a flat edge (33) at the end of the nut thread (30) for engaging a tool.

7. A screw connection according to one of claims 1 to 5, characterised in that the sleeve (23) has on its outer surface a flat edge or teeth (34) for engaging a tool.

8. A screw connection according to one of claims 1 to 7, characterised in that, on its end facing the flange (3), the sleeve (23) is provided with circular grooves (25).

9. A screw connection according to claim 8, characterised in that the grooves (25) cooperate with preformed grooves (26) in the flange (3).

10. A screw connection according to one of claims 1 to 9, characterised in that on the end of the nut (29) facing away from the sleeve (23), there are provided markings (36, 37) on the screw bolt (15).

11. A screw connection according to one of claims 1 to 10, characterised in that on the end of the screw bolt (15), facing away from the sleeve (23), there is arranged a rotationally symmetric gripping button (40).

12. A screw connection according to one of claims 1 to 11, characterised in that the screw bolt (15) is manufactured from heat treated steel and the thread (14, 30) is rolled.

13. A screw connection according to one of claims 1 to 12, characterised in that the flanges (2, 3) are part of remote-controllable tubular connection (1) with a sealing (10) surrounding the screw bolt (15).

## Revendications

1. Raccord à vis télécommandable comportant deux brides (2, 3) qui sont raccordées par au moins un boulon (15) à un écrou (29), et dans lequel entre l'écrou (29) et la bride (3) tournée vers cet écrou est disposé un anneau qui entoure le boulon (15) et peut être déplacé dans la direction axiale le long du boulon (15), caractérisé par le fait que l'anneau est une douille (23) raccordée avec blocage en rotation au boulon (15).

2. Raccord à vis suivant la revendication 1, caractérisé par le fait qu'il est prévu, comme raccord, un profil d'arbre denté (21, 24).

3. Raccord à vis suivant la revendication 2, caractérisé par le fait que le profil d'arbre denté (21, 24) possède, notamment dans la direction radiale, un jeu accru par rapport à des dimensions normalisées.

4. Raccord à vis suivant la revendication 1, 2 ou 3, caractérisé par le fait que la douille (23) et l'écrou (29) coopèrent au moyen de surfaces bombées (28).

5. Raccord à vis suivant la revendication 2, 3 ou 4, caractérisé par le fait que la douille (23) comporte un épaulement intérieur (27), qui est tourné vers l'écrou (28) et dont le diamètre intérieur est supérieur au filetage (30) de l'écrou, mais est inférieur au diamètre extérieur du profil d'arbre denté (21).

6. Raccord à vis suivant l'une des revendications 1 à 5, caractérisé par le fait que le boulon (15) possède, à l'extrémité du filetage (30) de l'écrou, un méplat (33) pour le montage d'un outil.

7. Raccord à vis suivant l'une des revendications 1 à 5, caractérisé par le fait que la douille (9) possède, sur sa face extérieure, un méplat ou des dents (34) pour le montage d'un outil.

8. Raccord à vis suivant l'une des revendications 1 à 7, caractérisé par le fait que la douille (23) comporte, sur son extrémité tournée vers la bride (3), des rainures en coin (25) de forme circulaire.

9. Raccord à vis suivant la revendication 8, caractérisé par le fait que les rainures en coin (25) coopèrent avec des rainures en coin préformées (26) de la bride (3).

10. Raccord à vis suivant l'une des revendications 1 à 9, caractérisé par le fait que des marques (36, 37) sont prévues sur le boulon (15) au niveau de l'extrémité de l'écrou (29), tournée à l'opposé de la douille (23).

11. Raccord à vis suivant l'une des revendications 1 à 10, caractérisé par le fait qu'un bouton de préhension à symétrie de révolution (40) est situé sur l'extrémité du boulon (15) située à l'opposé de la douille (23).

12. Raccord à vis suivant l'une des revendications 1 à 11, caractérisé par le fait que le boulon (15) est réalisé en un acier de traitement et que le filetage (14, 30) est laminé

13. Raccord à vis suivant l'une des revendications 1 à 12, caractérisé par le fait que les brides (2, 3) font partie d'un raccord tubulaire télécommandable (1) comportant une garniture d'étanchéité (10) qui entoure le boulon (15).